# EUROPÄISCHE PATENTANMELDUNG

(11) **EP 0 644 239 A1**
(43) Veröffentlichungstag der Anmeldung: **22.03.1995**
(21) Anmeldenummer: 94113740.8
(22) Anmeldetag: 02.09.1994
(51) Int. Cl.: C09B 67/22, D06P 1/38, C09B 62/44

(54) **Mischungen von Farbstoffen mit faserreaktiven Gruppen und deren Verwendung zum Färben von Fasermaterialien**

(30) Priorität: 21.09.1993 DE 4332048
(71) Anmelder: HOECHST AKTIENGESELLSCHAFT, D-65929 Frankfurt am Main (DE)
(72) Erfinder: Russ, Werner Hubert, Dr., D-65439 Flörsheim/Main (DE); Hussong, Kurt, Dr., D-65812 Bad Soden/Ts (DE)

(57) **Zusammenfassung**

Farbstoffmischung, die drei bis sieben faserreaktive Farbstoffe enthält, die aus Farbstoffen der nachstehend angegebenen und definierten allgemeinen Formeln (1) bis (7) ausgewählt sind mit der Maßgabe, daß mindestens ein Vertreter aus den Formeln (1) und/oder (2), mindestens ein Vertreter aus den Formeln (3) und/oder (4) und mindestens ein Vertreter aus den Formeln (5) und/oder (6) und/oder (7) in der Farbstoffmischung enthalten sind: 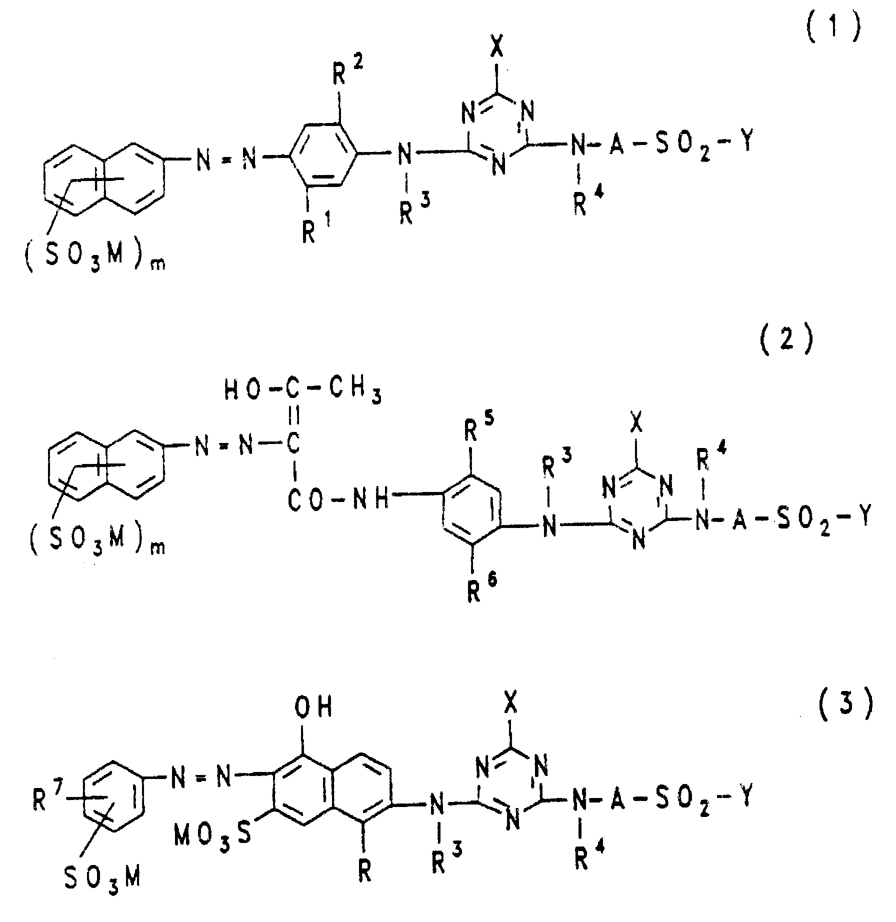 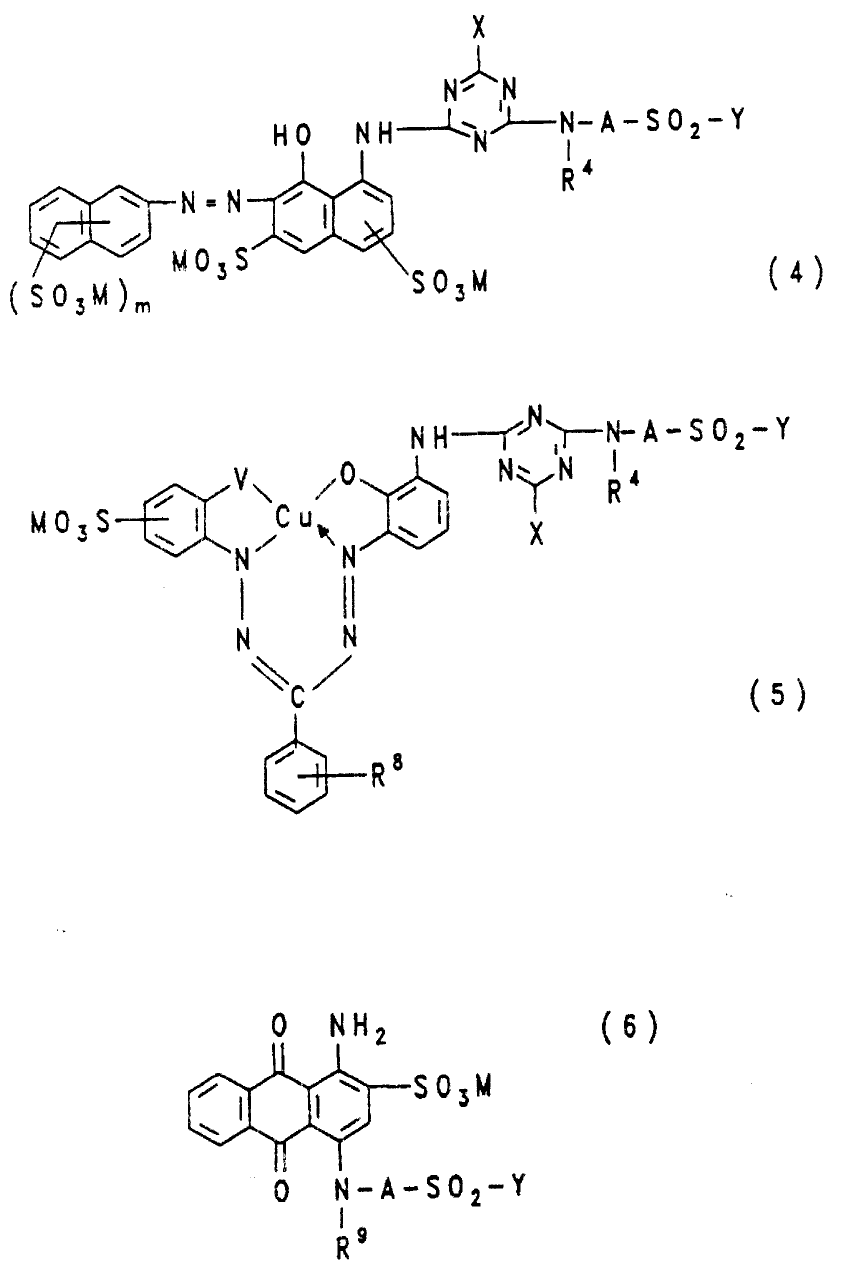 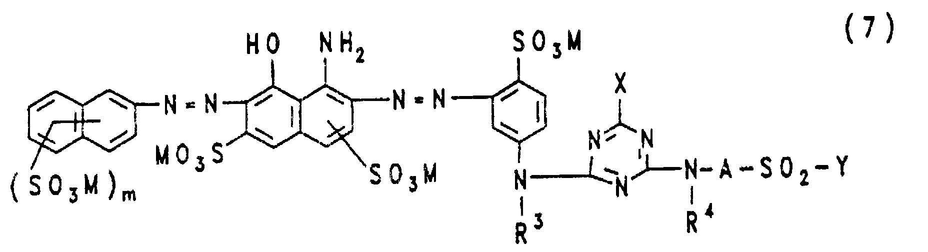
worin bedeuten:
- M: ist Wasserstoff oder ein Alkalimetall;
- m: ist die Zahl 1, 2 oder 3;
- X: ist Cyanoamino, Alkoxy von 1 bis 4 C-Atomen oder Alkoxy von 2 bis 4 C-Atomen, das durch Alkoxy von 1 bis 4 C-Atomen substituiert ist;
- Y: ist Vinyl oder ist Ethyl, das in ßi-Stellung einen Substituenten enthält, der durch Alkali unter Bildung der Vinylgruppe eliminierbar ist;
- R, R₁ bis R₉: sind Wasserstoff oder Substituenten;
- A: ist Alkylen von 2 bis 6 C-Atomen, das substituiert sein kann;
- V: ist eine Carbonylgruppe der Formel -CO-O- oder eine Oxygruppe der Formel -0-;

die eine Gruppe -SO₃M in Formel (4) und in Formel (7) steht in meta- oder para-Stellung zur Aminogruppe an den Naphthalinkern des Aminonaphtholrestes gebunden.

## Beschreibung

Die Erfindung liegt auf dem technischen Gebiet der faserreaktiven Farbstoffe.

Zur Herstellung von Färbungen mit fein abgestuften Nuancen werden Mischungen von Farbstoffen verschiedener Farbe in die Färbebäder, Färbeflotten, Druckpasten etc. eingesetzt. Insbesondere wählt man hierzu Mischungen von Farbstoffen mit gelber, roter und blauer Farbe. Hierbei ist es insbesondere bei der Anwendung der Farbstoffmischungen im Ausziehverfahren wichtig, daß die Farbstoffe möglichst ein konstant gleichartiges färberisches Verhalten haben, d.h. ein möglichst gleiches Aufzieh- und Migrationsvermögen und möglichst hohen und vergleichbaren Fixiergrad (Aufbau) und gleiche Stabilität besitzen, um die Reproduzierbarkeit der gewünschten Farbnuance und gleichen Farbausfall auch bei länger laufenden Färbe- und Druckprozessen zu gewährleisten. Zudem sollten die einzelnen Farbstoffe möglichst gleiche Echtheiten aufweisen.

Aus der Europäischen Patentanmeldungs-Veröffentlichung Nr. 0 525 805 sind bereits Farbstoffmischungen bekannt, die aus mindestens fünf faserreaktiven Farbstoffen bestehen.

Es wurden nunmehr neue Farbstoffmischungen gefunden, die drei bis sieben, vorzugsweise vier bis sieben, faserreaktive Farbstoffe enthalten, die aus Farbstoffen der nachstehend angegebenen und definierten allgemeinen Formeln (1) bis (7) ausgewählt sind mit der Maßgabe, daß mindestens ein Vertreter aus den Formeln (1) und/oder (2), mindestens ein Vertreter aus den Formeln (3) und/oder (4) und mindestens ein Vertreter aus den Formeln (5) und/oder (6) und/oder (7) in der Farbstoffmischung enthalten sind.

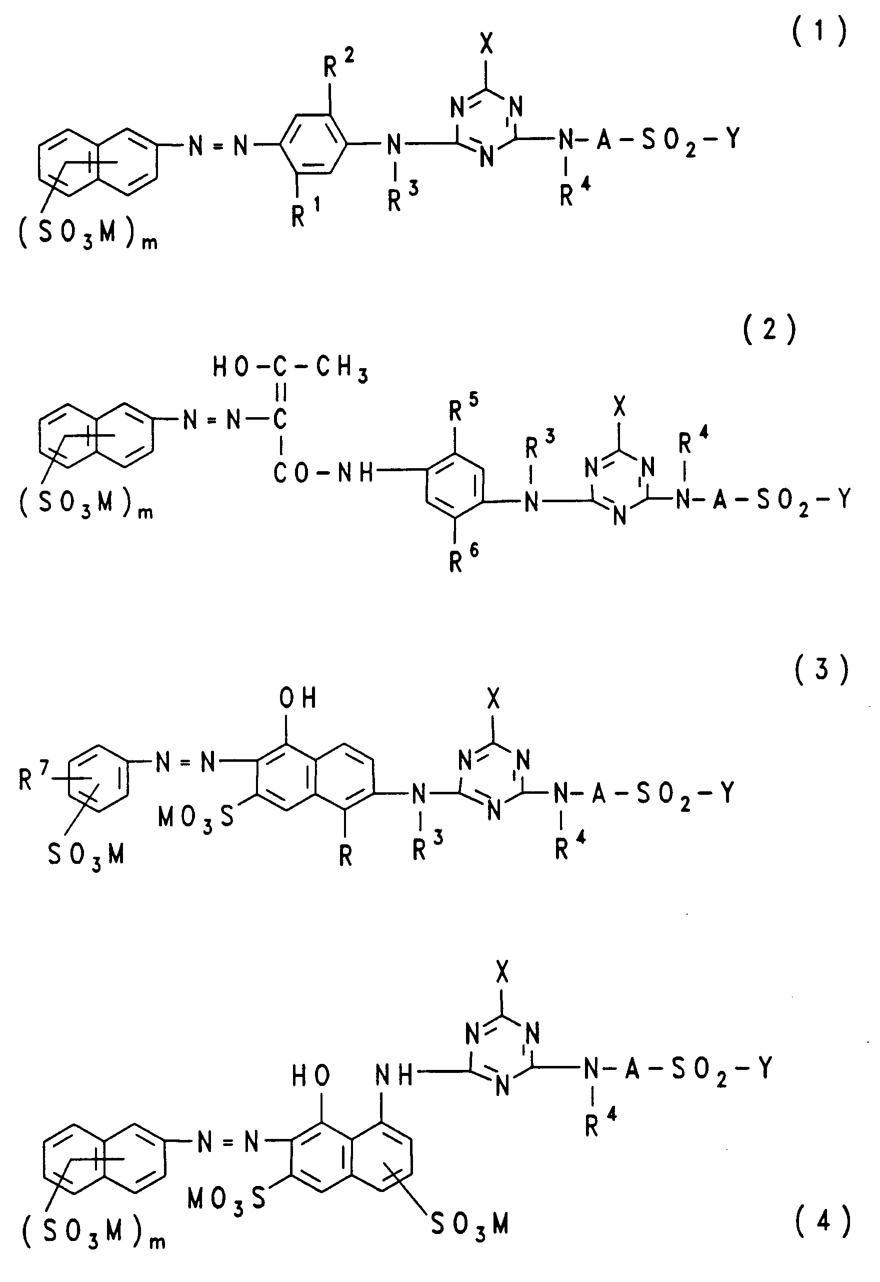

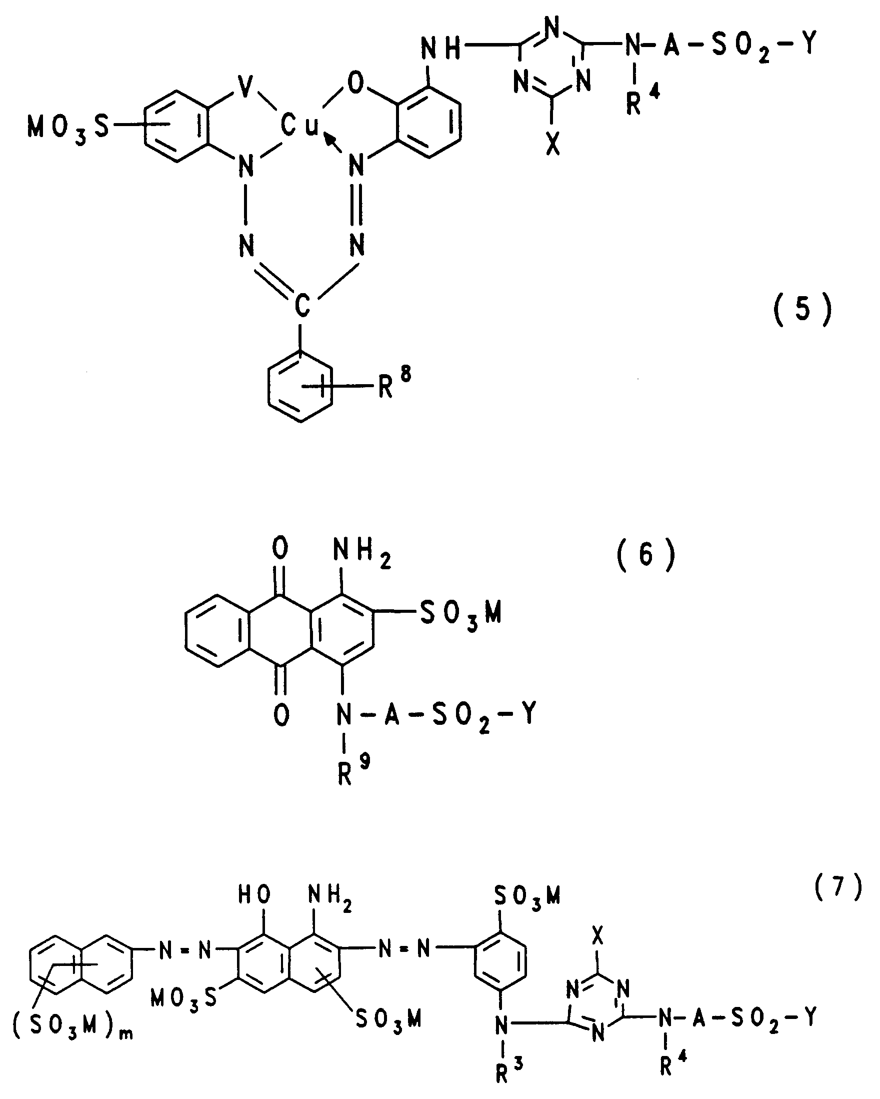

In diesen Formeln bedeuten:
- M: ist Wasserstoff oder ein Alkalimetall, wie Natrium, Kalium oder Lithium;
- m: ist die Zahl 1, 2 oder 3;
- X: ist Cyanoamino, Alkoxy von 1 bis 4 C-Atomen, wie Ethoxy und insbesondere Methoxy, oder Alkoxy von 2 bis 4 C-Atomen, wie Ethoxy und Propoxy, das durch Alkoxy von 1 bis 4 C-Atomen, wie Methoxy, Ethoxy oder Propoxy, substituiert ist, bevorzugt Methoxy und insbesondere Cyanoamino;
- Y: ist Vinyl oder ist Ethyl, das in β-Stellung einen Substituenten enthält, der durch Alkali unter Bildung der Vinylgruppe eliminierbar ist;
- R¹: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Alkanoylamino von 2 bis 5 C-Atomen, wie Acetylamino und Propionylamino, oder Ureido;
- R²: ist Wasserstoff, Sulfo, Alkyl von 1 bis 4 C-Atomen, wie Ethyl und insbesondere Methyl oder Alkoxy von 1 bis 4 C-Atomen, wie Ethoxy und insbesondere Methoxy;
- R³: ist Wasserstoff oder Alkyl von 1 bis 4 C-Atomen, wie Methyl, Ethyl oder Propyl, das substituiert sein kann, wie beispielsweise durch Hydroxy, Cyano, Alkoxy von 1 bis 4 C-Atomen, wie Methoxy und Ethoxy, Carboxy, Carbamoyl, Alkoxycarbonyl von 2 bis 5 C-Atomen, wie Carbomethoxy und Carbethoxy, Alkylcarbonyloxy von 2 bis 5 C-Atomen, Sulfo, Sulfamoyl oder Halogen, wie Chlor oder Brom;
- R⁴: ist Wasserstoff oder Alkyl von 1 bis 4 C-Atomen, wie Methyl, Ethyl oder Propyl, das substituiert sein kann, wie beispielsweise durch Hydroxy, Cyano, Alkoxy von 1 bis 4 C-Atomen, wie Methoxy und Ethoxy, Carboxy, Carbamoyl, Alkoxycarbonyl von 2 bis 5 C-Atomen, wie Carbomethoxy und Carbethoxy, Alkylcarbonyloxy von 2 bis 5 C-Atomen, Sulfo, Sulfamoyl oder Halogen, wie Chlor oder Brom, oder ist Phenyl, das durch 1 oder 2 Substituenten aus der Gruppe Sulfo, Methyl, Ethyl, Methoxy, Ethoxy und Carboxy substituiert sein kann;
- A: ist Alkylen von 2 bis 6 C-Atomen, bevorzugt von 2 oder 3 C-Atomen, wie Ethylen und n-Propylen, das substituiert sein kann, wie beispielsweise durch Hydroxy, Alkoxy von 1 bis 4 C-Atomen, wie Methoxy und Ethoxy, Sulfo, Carboxy, Halogen, wie Chlor oder Brom;
- R: ist Wasserstoff oder Sulfo;
- R⁵: ist Wasserstoff, Sulfo, Alkyl von 1 bis 4 C-Atomen, wie Ethyl und insbesondere Methyl, oder Alkoxy von 1 bis 4 C-Atomen, wie Ethoxy und insbesondere Methoxy;
- R⁶: ist Wasserstoff, Sulfo, Alkyl von 1 bis 4 C-Atomen, wie Ethyl und insbesondere Methyl, oder Alkoxy von 1 bis 4 C-Atomen, wie Ethoxy und insbesondere Methoxy;
- R⁷: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy;
- V: ist eine Carbonyloxygruppe der Formel -CO-O- oder eine Oxygruppe der Formel -O-;
- R⁸: ist Wasserstoff, Methyl, Ethyl, Nitro, Sulfo oder Chlor;
- R⁹: ist Phenyl, Monosulfo-phenyl oder Monocarboxy-phenyl;
die eine Gruppe -SO₃M in Formel (4) und in Formel (7) steht in meta- oder para-Stellung, bevorzugt in meta-Stellung, zur Aminogruppe an den Naphthalinkern gebunden.

Die einzelnen Formelglieder in den obengenannten und ebenso in den nachfolgend genannten allgemeinen Formeln, auch solche mit gleicher Bezeichnung innerhalb einer allgemeinen Formel, können im Rahmen ihrer Bedeutung zueinander gleiche oder voneinander verschiedene Bedeutungen besitzen.

Alkalisch eliminierbare Substituenten, die in β-Stellung der Ethylgruppe von Y stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Y β-Sulfatoethyl oder Vinyl und insbesondere bevorzugt β-Sulfatoethyl.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel -SO₃M, Carboxygruppen Gruppen entsprechend der allgemeinen Formel -COOM, Thiosulfatogruppen Gruppen entsprechend der allgemeinen Formel -S-SO₃M, Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt.

Unsubstituierte und substituierte Alkylreste R³ und R⁴ sind beispielsweise Methyl, Ethyl, n-Propyl, Isopropyl, n-Butyl, Isobutyl, 2-Methyl-propyl, 2-Hydroxy-ethyl, 2-Hydroxy-propyl, 3-Hydroxy-propyl, 2-Hydroxy-butyl, 3-Hydroxy-butyl, 4-Hydroxy-butyl, 2,3-Dihydroxy-butyl, 3,4-Dihydroxy-butyl, Cyanomethyl, 2-Cyano-ethyl, 3-Cyano-propyl, Methoxymethyl, Ethoxymethyl, 2-Methoxy-ethyl, 2-Ethoxy-ethyl, 3-Methoxy-propyl, 3-Ethoxy-propyl, 2-Hydroxy-3-methoxy-propyl, Chlormethyl, Brommethyl, 2-Chlor-ethyl, 2-Brom-ethyl, 3-Chlor-propyl, 3-Brom-propyl, 4-Chlor-butyl, 4-Brom-butyl, Carboxymethyl, 2-Carboxy-ethyl, 3-Carboxy-propyl, 4-Carboxy-butyl, 1,2-Dicarboxy-ethyl, Carbamoylmethyl, 2-Carbamoyl-ethyl, 3-Carbamoyl-propyl, 4-Carbamoyl-butyl, Methoxycarbonylmethyl, Ethoxycarbonylmethyl, 2-Methoxycarbonyl-ethyl, 2-Ethoxycarbonyl-ethyl, 3-Methoxycarbonyl-propyl, 3-Ethoxycarbonyl-propyl, 4-Methoxycarbonyl-butyl, 4-Ethoxycarbonyl-butyl, Methylcarbonyloxymethyl, 2-Methylcarbonyloxy-ethyl, 2-Ethylcarbonyloxy-ethyl, 3-Methylcarbonyloxy-propyl, 3-Ethylcarbonyloxy-propyl, 4-Ethylcarbonyloxy-butyl, Sulfomethyl, 2-Sulfo-ethyl, 3-Sulfo-propyl, 4-Sulfo-butyl, Sulfamoylmethyl, 2-Sulfamoyl-ethyl, 3-Sulfamoyl-propyl und 4-Sulfamoyl-butyl. Bevorzugt ist R³ Wasserstoff, Methyl oder Ethyl und insbesondere Wasserstoff und R⁴ Wasserstoff, Methyl, Ethyl oder Phenyl. Bevorzugt ist in Formel (5) der Rest V die Carbonyloxygruppe. Weiterhin bevorzugt ist der Rest A gleich Methylen, 1,2-Ethylen oder 1,3-Propylen.

Bevorzugt von den Farbstoffen der allgemeinen Formel (1) sind die Farbstoffe der allgemeinen Formel (1A) 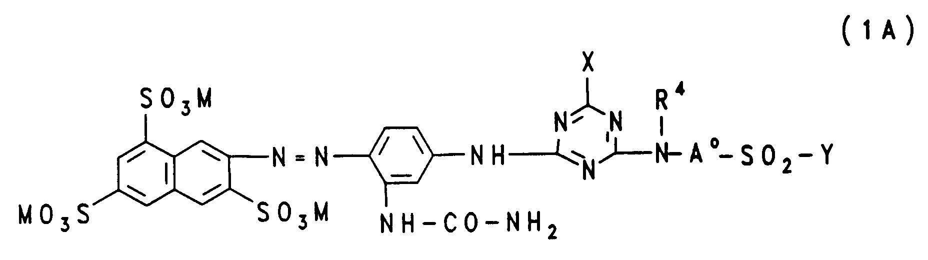
in welcher M, R⁴ und Y die obengenannten, insbesondere bevorzugten, Bedeutungen haben, A^{o} 1,2-Ethylen oder bevorzugt 1,3-Propylen ist und X für Cyanoamino oder Methoxy steht.

Bevorzugt sind von den Farbstoffen der allgemeinen Formel (2) diejenigen der allgemeinen Formel (2A) 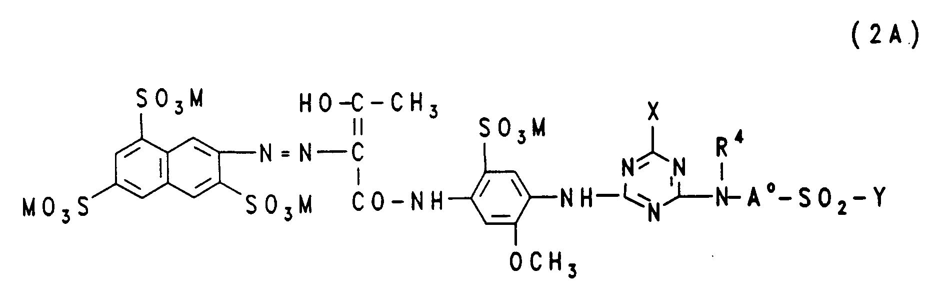
in welcher M, R⁴ und Y die obengenannten, insbesondere bevorzugten, Bedeutungen haben, A^{o} 1,2-Ethylen oder bevorzugt 1,3-Propylen ist und X für Cyanoamino oder Methoxy steht.

Bevorzugte Verbindungen aus der allgemeinen Formel (3) sind Farbstoffe der allgemeinen Formel (3A) 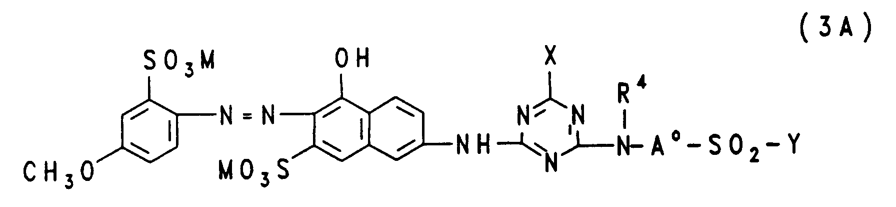
in welcher M, R⁴ und Y die obengenannten, insbesondere bevorzugten, Bedeutungen haben, A^{o} 1,2-Ethylen oder bevorzugt 1,3-Propylen ist und X für Cyanoamino oder Methoxy steht.

Bevorzugte Verbindungen der allgemeinen Formel (4) sind solche der allgemeinen Formel (4A) 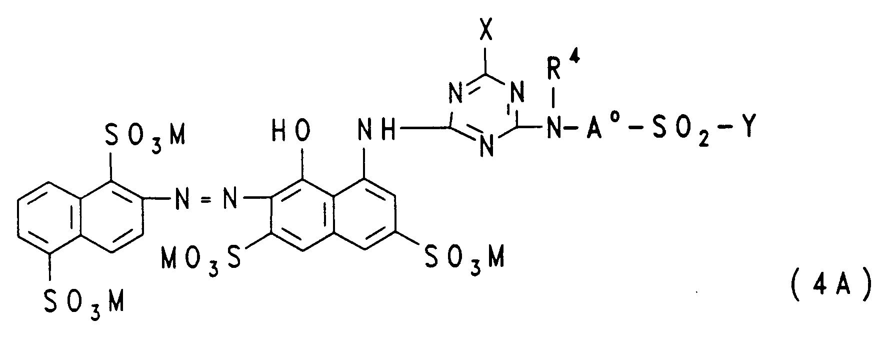
in welcher M, R⁴ und Y die obengenannten, insbesondere bevorzugten, Bedeutungen haben, A^{o} 1,2-Ethylen oder bevorzugt 1,3-Propylen ist und X für Cyanoamino oder Methoxy steht.

Von den Verbindungen der allgemeinen Formel (5) sind insbesondere diejenigen der allgemeinen Formel (5A) 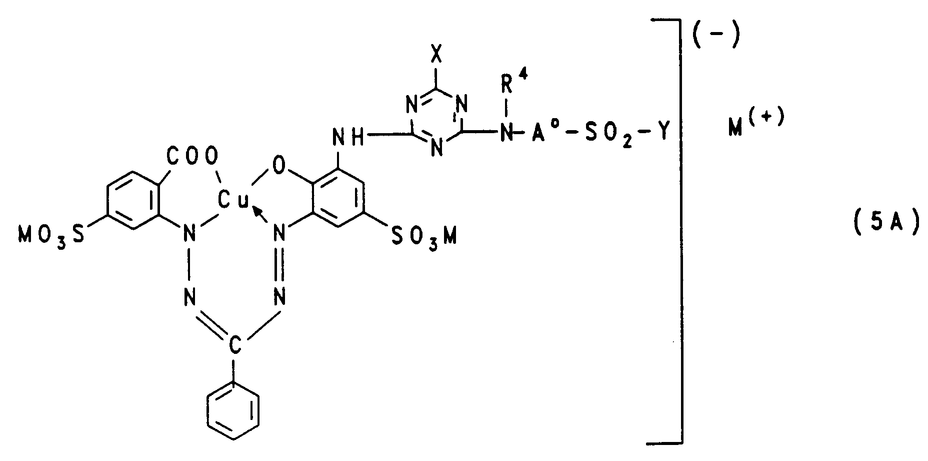
bevorzugt, in welcher M, R⁴ und Y die obengenannten, insbesondere bevorzugten, Bedeutungen haben, A^{o} 1,2-Ethylen oder bevorzugt 1,3-Propylen ist und X für Cyanoamino oder Methoxy steht.

Von den Verbindungen der allgemeinen Formel (6) können die der allgemeinen Formel (6A) 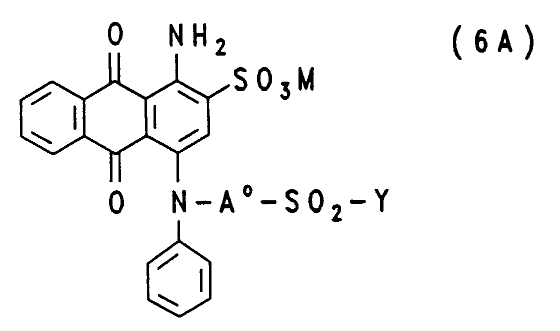
hervorgehoben werden, in welcher M und Y die obengenannten, insbesondere bevorzugten, Bedeutungen haben und A^{o} 1,2-Ethylen oder bevorzugt 1,3-Propylen ist.

Bevorzugte Farbstoffe aus der allgemeinen Formel (7) sind die der allgemeinen Formel (7A) 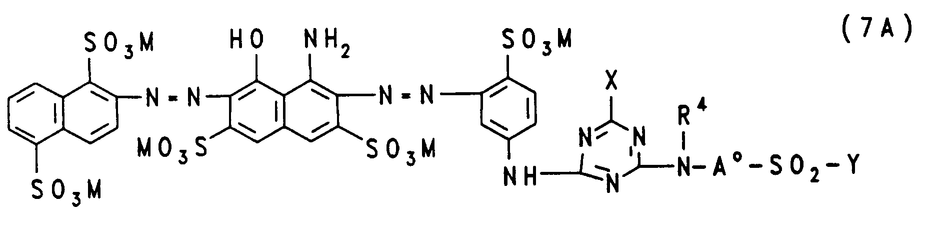
in welcher M, R⁴ und Y die obengenannten, insbesondere bevorzugten, Bedeutungen haben, A^{o} 1,2-Ethylen oder bevorzugt 1,3-Propylen ist und X für Cyanoamino oder Methoxy steht.

Die Farbstoffmischung kann vor deren Anwendung zum Färben durch mechanische Mischung der einzelnen Farbstoffkomponenten hergestellt werden oder erst in den Färbeflotten, Färbebädern, Druckpasten etc. durch Zugabe und Zumischung der einzelnen Farbstoffkomponenten bei Herstellung der Färbeflotten etc.. Die erfindungsgemäßen Farbstoffmischungen können in fester (bspw. granulierter oder pulvriger) Form und ebenso in wäßriger Lösung als Flüssigpräparation vorliegen. Die Farbstoffmischungen können anorganische Salze, wie Natriumsulfat und Natriumchlorid, Dispergiermittel, wie ein Naphthalinsulfonsäure-Formaldehyd-Kondensationsprodukt, staubverhindernde Mittel, wie Di-(2-ethyl-hexyl)-terephthalat oder ein Alkandiol von 4 bis 8 C-Atomen, wie Hexylenglykol, Puffersubstanzen, die einen pH-Wert zwischen 3 und 7 einzustellen vermögen, wie beispielsweise Natriumacetat, Natriumborat, Natriumhydrogenphosphat und Natriumcitrat, Wasserenthärter, wie Polyphosphate, oder andere übliche Färbehilfsmittel enthalten. Der Gehalt an den einzelnen Farbstoffkomponenten in den Farbstoffmischungen kann innerhalb weiter Bereiche liegen. So kann der Farbstoffanteil jeden Farbstoffes innerhalb der Grenzen zwischen 3 und 70 Gew.-%, bezogen auf das Gesamtgewicht aller Farbstoffe, liegen, wobei der Gesamtanteil aller Farbstoffe auf 100 Gew.-% gerechnet wird. Bevorzugt liegt der einzelne Farbstoff in der Farbstoffmischung innerhalb der Grenzen zwischen 3 und 40 Gew.-%.

Die erfindungsgemäßen Farbstoffmischungen kommen in fester als auch in flüssiger Form in der für faserreaktive Farbstoffe üblichen Weise zur färberischen Anwendung, bevorzugt unter den üblichen Färbeweisen, die für die Trichromiefärbung bekannt sind. Die vorliegende Erfindung betrifft deshalb auch die Verwendung der erfindungsgemäßen Farbstoffmischungen zum Färben von hydroxy- und/oder carbonamidgruppenhaltigen Fasermaterialien, bei welchen man die Farbstoffmischung in wäßriger Lösung auf das Fasermaterial aufbringt oder in das Fasermaterial einbringt und die Farbstoffe mittels Wärme oder mit Hilfe eines alkalisch wirkenden Mittels oder mittels beider Maßnahmen auf dem Fasermaterial fixiert. Unter Färbeverfahren werden auch die üblichen Druckverfahren verstanden. Die Fasermaterialien können in der allgemein üblichen Form zur Anwendung kommen, wie beispielsweise in Form von Geweben und Garnen, wie in Form von Strängen und Wickelkörpern.

Hydroxygruppenhaltige Materialien sind natürliche oder synthetische hydroxygruppenahltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Farbausbeuten sowie ausgezeichnetem Farbaufbau bei hohen Fixiergraden. Man färbt bei Temperaturen zwischen 40 und 105°C, gegebenenfalls bei Temperaturen bis zu 120°C unter Druck, und gegebenenfalls in Gegenwart von üblichen Färbereihilfsmitteln im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der erfindungsgemäßen Farbstoffmischungen beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten mit hohen Fixiergraden und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumcarbonat oder ein anderes säurebindendes Mittel und die erfindungsgemäße Farbstoffmischung enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektkrolythaltiges alkalisches Bad oder durch Überklotzen mit einer alkalischen elektkrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der erfindungsgemäßen Farbstoffmischung auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalilmetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäße Farbstoffmischungen mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Anteilen der erfindungsgemäßen Farbstoffmischungen ausgezeichnete Naßechtheiten, zumal sich solche nicht fixierten Anteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammonmiumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifachen molaren Menge einer Aminobenzolsulfonsäure und/oder einer Aminonaphthalinsulfonsäure und/oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemäßen Farbstoffmischungen hergestellten Färbungen und Drucke besitzen eine hohe Farbstärke, eine gute Lichtechtheit und gute Naßechtheiten, wie Wasch-, Walk-, Wasser-, Seewasser-, Überfärbe- und Schweißechtheiten, des weiteren eine gute Plissierechtheit, Bügelechtheit und Reibechtheit.

Besonders hervorzuheben sind die mit den erfindungsgemäßen Farbstoffmischungen auf Cellulosefasermaterialien erzielbaren hohen Fixierausbeuten, die bei der Anwendung nach Druckverfahren und Klotzfärbeverfahren über 90 % betragen können. Ein weiterer Vorteil der erfindungsgemäßen Farbstoffmischungen besteht in der leichten Auswaschbarkeit der beim Druck- oder Färbevorgang nicht fixierten Anteile, wodurch der Waschvorgang der bedruckten oder gefärbten Cellulosefasermaterialien mit geringen Waschflottenmengen und gegebenenfalls einer energiesparenden Temperaturführung während des Waschvorganges bewerkstelligt werden kann.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Farbstoffe können in Form der freien Säure angegeben sein; sie werden jedoch in Form ihrer Alkalimetallsalze, wie Lithium-, Natrium oder Kaliumsalze, zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

### Beispiel 1

100 Teile eines Gewirkes aus Baumwolle werden in einer Haspelkufe in 1500 Teilen Wasser von 60°C umlaufen lassen. Sodann werden folgende Farbstoffsalze hinzugegeben:
0,8 Teile des Farbstoffes der allgemeinen Formel (1A) mit X gleich Cyanoamino,
A^{o} gleich 1,3-Propylen, R⁴ gleich Wasserstoff und Y gleich β-Sulfatoethyl;
0,8 Teile des Farbstoffes der allgemeinen Formel (2A) mit X gleich Cyanoamino,
A^{o} gleich 1,3-Propylen, R⁴ gleich Ethyl und Y gleich β-Sulfatoethyl;
0,5 Teile des Farbstoffes der allgemeinen Formel (3A) mit X gleich Cyanoamino,
A^{o} gleich 1,3-Propylen, R⁴ gleich Ethyl und Y gleich β-Sulfatoethyl;
1,1 Teile des Farbstoffes der allgemeinen Formel (4A) mit X gleich Cyanoamino,
A^{o} gleich 1,3-Propylen, R⁴ gleich Wasserstoff und Y gleich β-Sulfatoethyl;
0,2 Teile des Farbstoffes der allgemeinen Formel (5A) mit X gleich Cyanoamino,
A^{o} gleich 1,3-Propylen, R⁴ gleich Ethyl und Y gleich β-Sulfatoethylsulfonyl;
0,6 Teile des Farbstoffes der allgemeinen Formel (6A) mit A^{o} gleich 1,3-Propylen und Y gleich β-Sulfatoethyl;
0,6 Teile des Farbstoffes der allgemeinen Formel (7A) mit X gleich Cyanoamino,
A^{o} gleich 1,3-Propylen, R⁴ gleich Wasserstoff und Y gleich β-Sulfatoethyl;
desweiteren werden 75 Teile Natriumsulfat hinzugegeben.

Das Gewirke wird zunächst bei 60°C während 20 Minuten in dieser Färbeflotte umlaufen lassen. Danach werden 30 Teile Natriumcarbonat hinzugegeben und die Färbung bei 60°C noch 60 Minuten weitergeführt.

Die erhaltene Färbung wird in üblicher Weise durch Spülen mit Wasser, durch Spülen in einem eine geringe Menge an Essigsäure enthaltenden wäßrigen Bad, durch erneutes Spülen mit Wasser, durch kochende Behandlung in einem ein nicht-ionisches Waschmittel enthaltenden wäßrigen Bad, durch erneutes Spülen mit Wasser und Trocknen nachbehandelt und fertiggestellt. Sie zeigt eine gleichmäßig rötlich tiefbraune Farbnuance, die von jeglichen Unegalitäten frei ist. Die Färbung besitzt weiterhin gute Licht-, Schweißlicht-, Chlorbadewasser-und Waschechtheiten. Färbungen mit gleicher Nuance und Echtheitseigenschaften werden erhalten, wenn der Färbeprozeß unter den angegebenen Bedingungen wiederholt wird.

### Beispiel 2

100 Teile eines Gewirkes aus Zellwolle wird in einer Jet-Färbemaschine in einer wäßrigen Farbstofflösung, enthaltend:
0,1 Teile des Farbstoffes der allgemeinen Formel (1A) mit X gleich Cyanoamino,
A^{o} gleich 1,3-Propylen, R⁴ gleich Ethyl und Y gleich β-Sulfatoethyl,
0,3 Teile des Farbstoffes der allgemeinen Formel (2A) mit X gleich Cyanoamino,
A^{o} gleich 1,3-Propylen, R⁴ gleich Wasserstoff und Y gleich β-Sulfatoethyl,
0,2 Teile des Farbstoffes der allgemeinen Formel (3A) mit X gleich Cyanoamino,
A^{o} gleich 1,3-Propylen, R⁴ gleich Wasserstoff und Y gleich β-Sulfatoethyl,
0,2 Teile des Farbstoffes der allgemeinen Formel (4A) mit X gleich Cyanoamino,
A^{o} gleich 1,3-Propylen, R⁴ gleich Wasserstoff und Y gleich β-Sulfatoethyl,
0,9 Teile des Farbstoffes der allgemeinen Formel (5A) mit X gleich Cyanoamino,
A^{o} gleich 1,3-Propylen, R⁴ gleich Wasserstoff und Y gleich β-Sulfatoethyl,
0,9 Teile des Farbstoffes der allgemeinen Formel (6A) mit A^{o} gleich 1,3-Propylen und Y gleich β-Sulfatoethyl und 0,4 Teile 7-Acetylamino-8-naphthol-3-natriumsulfonat und 20 Teile Natriumsulfat während 20 Minuten bei 60°C behandelt. Anschließend werden der Färbelösung 2,5 Teile Natriumcarbonat und 0,5 Vol.-Teile einer wäßrigen Natriumhydroxidlösung von 38 Bé hinzugegeben, und das Gewirke wird für weitere 40 Minuten bei 60°C in dieser Färbeflotte behandelt.

Die erhaltene Färbung wird in üblicher Weise durch Spülen mit Wasser, durch Spülen in einem eine geringe Menge an Essigsäure enthaltenden wäßrigen Bad, durch erneutes Spülen mit Wasser, durch kochende Behandlung in einem ein nicht-ionisches Waschmittel enthaltenden wäßrigen Bad, durch erneutes Spülen mit Wasser und Trocknen nachbehandelt und fertiggestellt. Es wird eine gleichmäßig rötlich blaugraue Färbung erhalten, die keinerlei Ungleichheiten in der Farbnuance zeigt. Die Färbung zeigt darüberhinaus gute Licht-, Schweißlicht-, Chlorbadewasser- und Waschechtheiten und kann in dieser Qualität durch weitere Färbeansätze reproduzierbar erhalten werden.

### Beispiel 3

100 Teile eines Baumwollgarnes werden gemäß einem Sandwich-Färbeverfahren bei 65°C während 30 Minuten bei einem Flottenverhältnis von 1:10 mit einer Färbeflotte behandelt, die 1,6-Teile des Farbstoffes der allgemeinen Formel (1A) mit X gleich Cyanoamino, A^{o} gleich 1,3-Propylen, R⁴ gleich Ethyl und Y gleich β-Sulfatoethyl, 0,4 Teile des Farbstoffes der allgemeinen Formel (3A) mit X gleich Cyanoamino, A^{o} gleich 1,3-Propylen, R⁴ gleich Wasserstoff und Y gleich β-Sulfatoethyl, 0,2 Teile des Farbstoffes der allgemeinen Formel (4A) mit X gleich Cyanoamino, A^{o} gleich 1,3-Propylen, R⁴ gleich Ethyl und Y gleich Vinyl, 0,4 Teile des Farbstoffes der allgemeinen Formel (5A) mit X gleich Cyanoamino, A^{o} gleich 1,3-Propylen, R⁴ gleich Wasserstoff und Y gleich Vinyl, 0,2 Teile des Farbstoffes der allgemeinen Formel (6A) A^{o} gleich 1,3-Propylen und Y gleich β-Sulfatoethyl, 0,4 Teile des Farbstoffes der allgemeinen Formel (7A) mit X gleich Cyanoamino, A^{o} gleich Ethylen, R⁴ gleich Ethyl und Y β-Sulfatoethyl und 50 Teile Natriumchlorid enthält. Danach werden 10 Teile Trinatriumphosphat hinzugegeben, und der Färbeprozeß wird während weiterer 60 Minuten bei 60°C zu Ende geführt.

Das erhaltene gefärbte Garn wird in üblicher Weise durch Spülen und Waschen nachbehandelt und fertiggestellt. Das Garn hat eine gleichmäßig tief dunkelgrüne Farbe, wobei keine Farbnuancenunterschiede zwischen den äußeren und den inneren Sandwich-Lagen festzustellen sind. Die Färbung besitzt darüberhinaus eine gute Licht-, Schweißlicht-, Chlorwasserbade- und Waschechtheit. Die Wiederholung des Färbeprozesses führt zu einem gleich guten Färbeergebnis.

### Beispiel 4

100 Teile eines Baumwollgewirkes werden bei einem Flottenverhältnis von 1:15 bei 60°C während 20 min in einer Haspelkufe mit einer wäßrigen Färbeflotte behandelt, die 0,1 Teile des Farbstoffes der allgemeinen Formel (1A) mit X gleich Cyanoamino, A^{o} gleich 1,3-Propylen, R⁴ gleich Ethyl und Y gleich β-Sulfatoethyl, 0,1 Teile des Farbstoffes der allgemeinen Formel (2A) mit X gleich Cyanoamino, R⁴ gleich Wasserstoff, A^{o} gleich 1,3-Propylen und Y gleich Vinyl, 0,3 Teile des Farbstoffes der allgemeinen Formel (8) 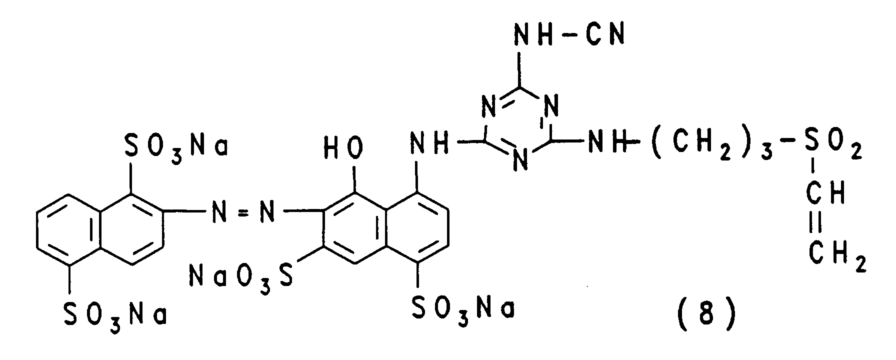
1,5 Teile des Farbstoffes der allgemeinen Formel (6A) mit A^{o} gleich 1,3-Propylen und Y gleich β-Sulfatoethyl, 0,9 Teile des Farbstoffes der allgemeinen Formel (7A) mit X gleich Cyanoamino, R⁴ gleich Ethyl, A^{o} gleich 1,3-Propylen und Y gleich β-Sulfatoethyl und 75 Teile Natriumsulfat enthält. Danach werden 30 Teile Natriumcarbonat hinzugegeben, und die Färbung wird bei 60°C für weitere 60 Minuten weitergeführt.

Die erhaltene und in üblicher Weise nachbehandelte Färbung zeigt eine gleichmäßige, von jeglichen Unebenheiten freie bläulich graue Nuance mit guten Licht-, Schweißlicht-, Chlorbadewasser- und Waschechtheiten.

### Beispiel 5

12 Teile eines Farbstoffes der allgemeinen Formel (1A) mit X gleich Cyanoamino, A^{o} gleich 1,3-Propylen, R⁴ gleich Wasserstoff und Y gleich β-Sulfatoethyl,
3 Teile eines Farbstoffes der allgemeinen Formel (2A) mit X gleich Cyanoamino,
A^{o} gleich 1,3-Propylen, R⁴ gleich Ethyl und Y gleich β-Sulfatoethyl,
12 Teile des Farbstoffes der allgemeinen Formel (3A) mit X gleich Cyanoamino,
A^{o} gleich 1,3-Propylen, R⁴ gleich Ethyl und Y gleich β-Sulfatoethyl,
8 Teile des Farbstoffes der allgemeinen Formel (4A) mit X gleich Cyanoamino,
A^{o} gleich 1,3-Propylen, R⁴ gleich Wasserstoff und Y gleich β-Sulfatoethyl,
0,15 Teile des Farbstoffes der allgemeinen Formel (5A) mit X gleich Cyanoamino, A^{o} gleich 1,3-Propylen, R⁴ gleich Ethyl und Y gleich β-Sulfatoethylsulfonyl,
0,4 Teile des Farbstoffes der allgemeinen Formel (6A) mit A^{o} gleich 1,3-Propylen und Y gleich β-Sulfatoethyl und
0,45 Teile des Farbstoffes der allgemeinen Formel (7A) mit X gleich Cyanoamino, A^{o} gleich 1,3-Propylen, R⁴ gleich Wasserstoff und Y gleich β-Sulfatoethyl,
werden zusammen in etwa 400 Vol.-Teilen heißem Wasser gelöst. In die auf 25°C abgekühlte Farbstofflösung gibt man 1 Teil Natriumalginat, 10 Teile m-Nitrobenzol-natriumsulfonat und 20 Teile Natriumhydrogencarbonat und füllt die erhaltene Farbstofflösung mit Wasser auf 1000 Volumenteile auf. Mit dieser etwa 25°C warmen Farbstofflösung wird sofort nach deren Herstellung ein Baumwollgewebe geklotzt, das anschließend zunächst bei 120°C während zwei Minuten getrocknet und dann für fünf Minuten mit 100°C heißem Wasserdampf behandelt wird, um die Farbstoffe zu fixieren.

Das gefärbte Gewebe zeigt eine einheitlich rötlichbraune Farbtönung und einen ausgezeichneten Farbaufbau, des weiteren gute Licht-, Schweißlicht-, Chlorbadewasser- und Waschechtheiten. Bei Wiederholung des Färbeprozesses unter den angegebenen Bedingungen erhält man eine Färbung gleicher Qualität und gleicher Nuance.

### Beispiel 6

21 Teile des Farbstoffes der allgemeinen Formel (1A) mit X gleich Cyanoamino,
A^{o} gleich 1,3-Propylen, R⁴ gleich Wasserstoff und Y gleich β-Sulfatoethyl,
6 Teile des Farbstoffes der allgemeinen Formel (2A) mit X gleich Cyanoamino,
A^{o} gleich 1,3-Propylen, R⁴ gleich Wasserstoff und Y gleich β-Sulfatoethyl,
21 Teile des Farbstoffes der allgemeinen Formel (3A) mit X gleich Cyanoamino,
A^{o} gleich 1,3-Propylen, R⁴ gleich Wasserstoff und Y gleich β-Sulfatoethyl,
6 Teile des Farbstoffes der allgemeinen Formel (4A) mit X gleich Cyanoamino,
A^{o} gleich 1,3-Propylen, R⁴ gleich Wasserstoff und Y gleich β-Sulfatoethyl,
3 Teile des Farbstoffes der allgemeinen Formel (5A) mit X gleich Cyanoamino,
A^{o} gleich 1,3-Propylen, R⁴ gleich Wasserstoff und Y gleich β-Sulfatoethyl und
3 Teile des Farbstoffes der allgemeinen Formel (6A) mit A^{o} gleich 1,3-Propylen und Y gleich β-Sulfatoethyl werden zusammen in etwa 400 Vol.-Teilen heißem Wasser gelöst; 20 Teile Natriumalginat, 10 Teile m-Nitrobenzol-natriumsulfonat und 20 Teile Natriumhydrogencarbonat werden zu der auf 20°C abgekühlten Farbstofflösung gegeben, die sodann mit Wasser auf 1000 Volumenteile aufgefüllt wird. Mit dieser Druckpaste wird sofort nach deren Herstellung bei 20°C ein Baumwollgewebe bedruckt; der Druck wird zunächst getrocknet und anschließend mit 100°C heißem Wasserdampf während 5 Minuten behandelt, um die Farbstoffe auf dem Gewebe zu fixieren. Der erhaltene Farbdruck wird in üblicher Weise durch Spülen und Waschen fertiggestellt. Man erhält ein einheitlich tieforange gefärbtes Druckmuster mit einem ausgezeichneten Farbaufbau. Die Qualität des Druckes und der Farbnuance ist bei Wiederholung der angegebenen Bedingungen gut reproduzierbar.

### Beispiel 7

Zur Herstellung einer Färbung eines Gewirkes aus Baumwolle verfährt man gemäß den Angaben des Beispieles 1, setzt jedoch anstelle der dort angegebenen Farbstoffe, neben den 75 Teilen Natriumsulfat, folgende Farbstoffmischung hinzu, bestehend aus:
0,5 Teilen des Farbstoffes der allgemeinen Formel (1A) mit X gleich Cyanoamino, R⁴ gleich Wasserstoff, A^{o} gleich 1,3-Propylen und X gleich Vinyl;
0,02 Teilen des Farbstoffes der allgemeinen Formel (2A) mit X gleich Cyanoamino, R⁴ gleich Ethyl, A^{o} gleich 1,3-Propylen und Y gleich Vinyl;
0,1 Teilen des Farbstoffes der allgemeinen Formel (3A) mit X gleich Cyanoamino, R⁴ gleich Wasserstoff, A^{o} gleich 1,3-Propylen und Y gleich Vinyl;
1,6 Teilen des Farbstoffes der allgemeinen Formel (4A) mit X gleich Cyanoamino, R⁴ gleich Wasserstoff, A^{o} gleich 1,3-Propylen und Y gleich β-Sulfatoethyl;
0,1 Teilen des Farbstoffes der allgemeinen Formel (5A) mit X gleich Cyanoamino, R⁴ gleich Wasserstoff, A^{o} gleich 1,3-Propylen und Y gleich β-Sulfatoethyl;
0,05 Teilen des Farbstoffes der allgemeinen Formel (6A) mit A^{o} gleich 1,3-Propylen und Y gleich β-Sulfatoethyl;
0,05 Teilen des Farbstoffes der allgemeinen Formel (7A) mit X gleich Cyanoamino, R⁴ gleich Wasserstoff, A^{o} gleich 1,3-Propylen und Y gleich Vinyl.

Man erhält ein gleichmäßig, einheitlich gefärbtes Garn mit rötlich purpurfarbener Nuance.

### Beispiel 8

Zur Herstellung einer Färbung eines Gewirkes aus Baumwolle verfährt man gemäß den Angaben des Beispieles 1, setzt jedoch anstelle der dort angegebenen Farbstoffe, neben den 75 Teilen Natriumsulfat, folgende Farbstoffmischung hinzu, bestehend aus:
0,83 Teilen des Farbstoffes der allgemeinen Formel (1A) mit X gleich Cyanoamino, R⁴ gleich Wasserstoff, A^{o} gleich 1,3-Propylen und Y gleich Vinyl;
0,03 Teilen des Farbstoffes der allgemeinen Formel (2A) mit X gleich Cyanoamino, R⁴ gleich Wasserstoff, A^{o} gleich 1,3-Propylen und Y gleich Vinyl;
0,02 Teilen des Farbstoffes der allgemeinen Formel (3A) mit X gleich Cyanoamino, R⁴ gleich Wasserstoff, A^{o} gleich 1,3-Propylen und Y gleich β-Sulfatoethyl;
0,41 Teilen des Farbstoffes der allgemeinen Formel (4A) mit X gleich Cyanoamino, R⁴ gleich Wasserstoff, A^{o} gleich 1,3-Propylen und Y gleich Vinyl;
1,2 Teilen des Farbstoffes der allgemeinen Formel (5A) mit X gleich Cyanoamino, R⁴ gleich Wasserstoff, A^{o} gleich 1,3-Propylen und Y gleich β-Sulfatoethyl;
0,06 Teilen des Farbstoffes der allgemeinen Formel (6A) mit A^{o} gleich 1,3-Propylen und Y gleich Vinyl;
0,08 Teilen des Farbstoffes der allgemeinen Formel (7A) mit X gleich Cyanoamino, R⁴ gleich Wasserstoff, A^{o} gleich 1,3-Propylen und Y gleich β-Sulfatoethyl.

Man erhält ein gleichmäßig, einheitlich gefärbtes Garn mit grauer Nuance.

### Beispiel 9

Zur Herstellung einer Färbung eines Gewirkes aus Baumwolle verfährt man gemäß den Angaben des Beispieles 1, setzt jedoch anstelle der dort angegebenen Farbstoffe, neben den 75 Teilen Natriumsulfat, folgende Farbstoffmischung hinzu, bestehend aus:
1,1 Teilen des Farbstoffes der allgemeinen Formel (1A) mit X gleich Cyanoamino, R⁴ gleich Wasserstoff, A^{o} gleich 1,3-Propylen und Y gleich β-Sulfatoethyl;
1,6 Teilen des Farbstoffes der allgemeinen Formel (2A) mit X gleich Cyanoamino, R⁴ gleich Wasserstoff, A^{o} gleich 1,3-Propylen und Y gleich β-Sulfatoethyl;
0,01 Teilen des Farbstoffes der allgemeinen Formel (3A) mit X gleich Cyanoamino, R⁴ gleich Wasserstoff, A^{o} gleich 1,3-Propylen und Y gleich Vinyl;
0,01 Teilen des Farbstoffes der allgemeinen Formel (4A) mit X gleich Cyanoamino, R⁴ gleich Wasserstoff, A^{o} gleich 1,3-Propylen und Y gleich Vinyl;
0,06 Teilen des Farbstoffes der allgemeinen Formel (5A) mit X gleich Cyanoamino, R⁴ gleich Wasserstoff, A^{o} gleich 1,3-Propylen und Y gleich Vinyl;
0,6 Teilen des Farbstoffes der allgemeinen Formel (6A) mit A^{o} gleich 1,3-Propylen und Y gleich β-Sulfatoethyl;
2,3 Teilen des Farbstoffes der allgemeinen Formel (7A) mit X gleich Cyanoamino, R⁴ gleich Wasserstoff, A^{o} gleich 1,3-Propylen und Y gleich Vinyl.

Man erhält ein gleichmäßig, einheitlich gefärbtes Garn mit tiefgrüner Nuance.

### Beispiel 10

Zur Herstellung einer Färbung eines Gewirkes aus Baumwolle verfährt man gemäß den Angaben des Beispieles 1, setzt jedoch anstelle der dort angegebenen Farbstoffe, neben den 75 Teilen Natriumsulfat, folgende Farbstoffmischung hinzu, bestehend aus:
0,15 Teilen des Farbstoffes der allgemeinen Formel (1A) mit X gleich Cyanoamino, R⁴ gleich Wasserstoff, A^{o} gleich 1,3-Propylen und Y gleich Vinyl;
0,01 Teilen des Farbstoffes der allgemeinen Formel (2A) mit X gleich Cyanoamino, R⁴ gleich Wasserstoff, A^{o} gleich 1,3-Propylen und Y gleich Vinyl;
0,02 Teilen des Farbstoffes der allgemeinen Formel (3A) mit X gleich Cyanoamino, R⁴ gleich Wasserstoff, A^{o} gleich 1,3-Propylen und Y gleich Vinyl;
0,32 Teilen des Farbstoffes der allgemeinen Formel (4A) mit X gleich Cyanoamino, R⁴ gleich Wasserstoff, A^{o} gleich 1,3-Propylen und Y gleich Vinyl;
0,2 Teilen des Farbstoffes der allgemeinen Formel (5A) mit X gleich Cyanoamino, R⁴ gleich Wasserstoff, A^{o} gleich 1,3-Propylen und Y gleich Vinyl;
3,1 Teilen des Farbstoffes der allgemeinen Formel (6A) mit A^{o} gleich 1,3-Propylen und Y gleich β-Sulfatoethyl;
0,15 Teilen des Farbstoffes der allgemeinen Formel (7A) mit X gleich Cyanoamino, R⁴ gleich Wasserstoff, A^{o} gleich 1,3-Propylen und Y gleich Vinyl.

Man erhält ein gleichmäßig, einheitlich gefärbtes Garn mit rotstichig blauer Nuance.

### Beispiel 11

100 Teile eines Gewirkes aus Kunstseide wird in einer Jet-Färbeapparatur unter Anwendung eines Flottenverhältnisses von 1:6 mit einer 60°C heißen wäßrigen Lösung einer Farbstoffpräparation zusammengebracht, die wie folgt zusammengesetzt ist:
0,04 Teile des Farbstoffes der allgemeinen Formel (1A) mit X gleich Cyanoamino, R⁴ gleich Ethyl, A^{o} gleich 1,3-Propylen und Y gleich β-Sulfatoethyl;
0,43 Teile des Farbstoffes der allgemeinen Formel (2A) mit X gleich Cyanoamino, R⁴ gleich Wasserstoff, A^{o} gleich 1,3-Propylen und Y gleich β-Sulfatoethyl;
0,1 Teile des Farbstoffes der allgemeinen Formel (3A) mit X gleich Cyanoamino, R⁴ gleich Wasserstoff, A^{o} gleich 1,3-Propylen und Y gleich β-Sulfatoethyl;
0,02 Teile des Farbstoffes der allgemeinen Formel (4A) mit X gleich Cyanoamino, R⁴ gleich Wasserstoff, A^{o} gleich 1,2-Ethylen und Y gleich β-Sulfatoethyl;
0,09 Teile des Farbstoffes der allgemeinen Formel (5A) mit X gleich Cyanoamino, R⁴ gleich Wasserstoff, A^{o} gleich 1,3-Propylen und Y gleich Vinyl;
0,03 Teile des Farbstoffes der allgemeinen Formel (7A) mit X gleich Cyanoamino, R⁴ gleich Wasserstoff, A^{o} gleich 1,3-Propylen und Y gleich Vinyl;
0,5 Teile eines Methylnaphthalinsulfonsäure/Formaldehyd-Kondensationsproduktes.

Das Gewirke wird zunächst während 20 Minuten mit dieser 60°C heißen Farbstofflösung behandelt, der sodann 2,5 Teile Natriumcarbonat und 0,5 Volumenteile einer wäßrigen Natriumhydroxidlösung von 38° Bé hinzugegeben werden. Der Färbeprozeß wird bei 60°C für 40 Minuten weitergeführt, das gefärbte Material danach aus der Apparatur entnommen und in üblicher Weise durch Spülen und Waschen fertiggestellt. Es wird eine orangefarbene Färbung mit gleichmäßiger Nuance ohne irgendwelche Farbschattierungen erhalten; die Färbung besitzt darüberhinaus einen ausgezeichneten Farbaufbau mit guten Licht-, Schweißlicht-, Chlorbadewasser-und Waschechtheiten. Die Wiederholung des Färbeprozesses unter den angegebenen Bedingungen führt zu Färbungen mit gleicher Nuance und den angegebenen guten Eigenschaften.

## Patentansprüche

1. Farbstoffmischung, die drei bis sieben faserreaktive Farbstoffe enthält, die aus Farbstoffen der nachstehend angegebenen und definierten allgemeinen Formeln (1) bis (7) ausgewählt sind mit der Maßgabe, daß mindestens ein Vertreter aus den Formeln (1) und/oder (2), mindestens ein Vertreter aus den Formeln (3) und/oder (4) und mindestens ein Vertreter aus den Formeln (5) und/oder (6) und/oder (7) in der Farbstoffmischung enthalten sind: 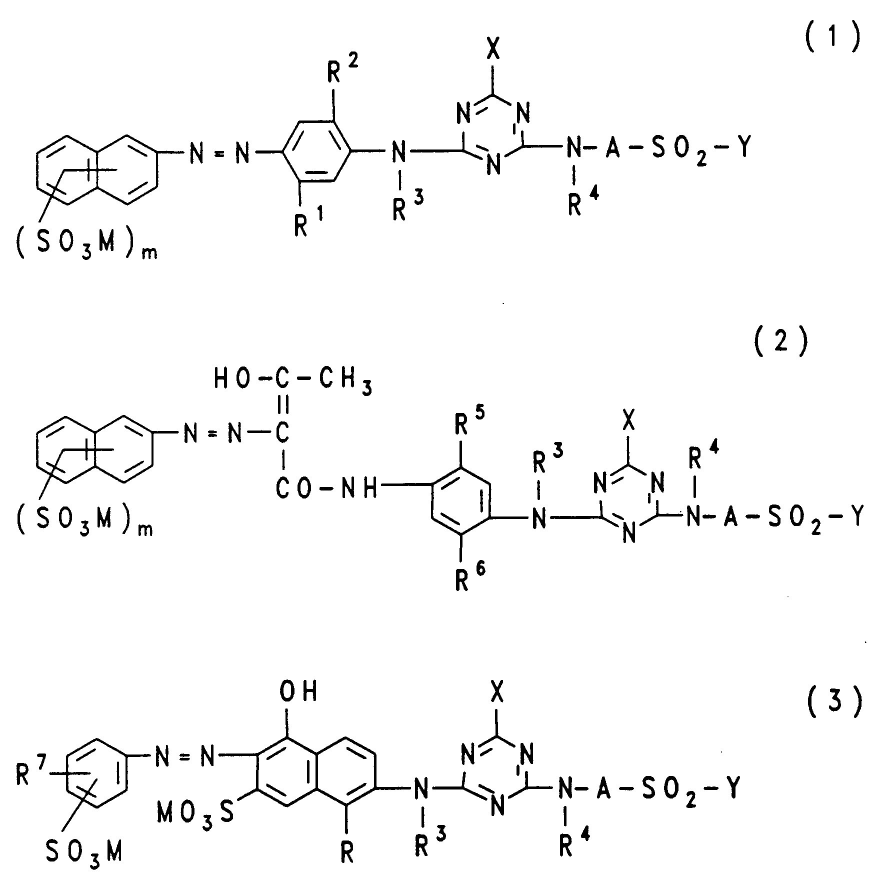 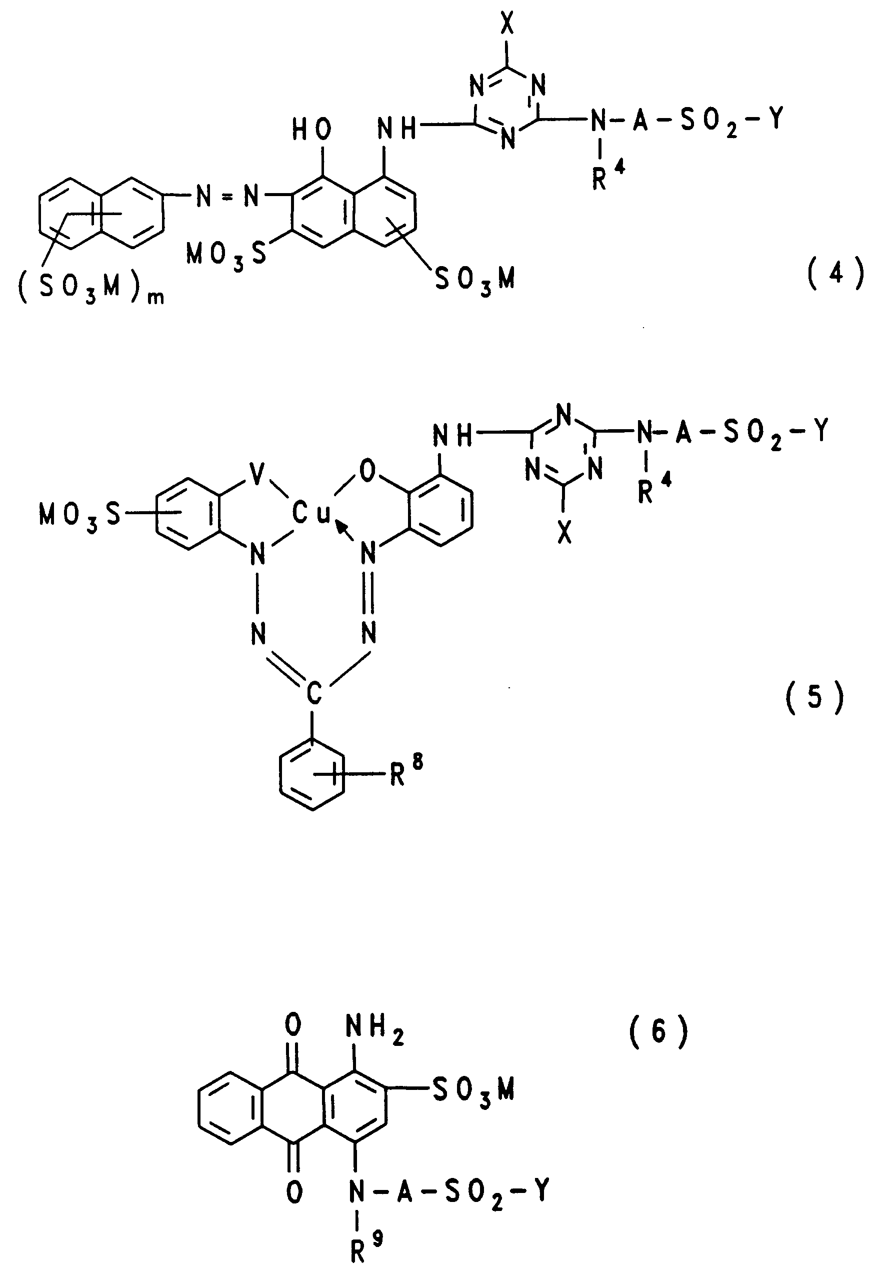 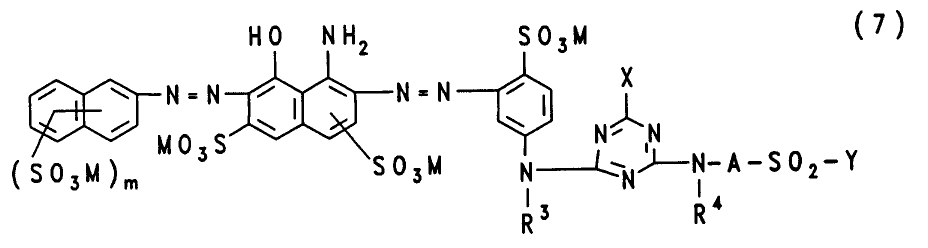 worin bedeuten:
M ist Wasserstoff oder ein Alkalimetall;
m ist die Zahl 1, 2 oder 3;
X ist Cyanoamino, Alkoxy von 1 bis 4 C-Atomen oder Alkoxy von 2 bis 4 C-Atomen, das durch Alkoxy von 1 bis 4 C-Atomen substituiert ist;
Y ist Vinyl oder ist Ethyl, das in β-Stellung einen Substituenten enthält, der durch Alkali unter Bildung der Vinylgruppe eliminierbar ist;
R¹ ist Wasserstoff, Alkyl von 1 bis 4 C-Atomen, Alkoxy von 1 bis 4 C-Atomen, Alkanoylamino von 2 bis 5 C-Atomen oder Ureido;
R² ist Wasserstoff, Sulfo, Alkyl von 1 bis 4 C-Atomen oder Alkoxy von 1 bis 4 C-Atomen;
R³ ist Wasserstoff oder Alkyl von 1 bis 4 C-Atomen, das substituiert sein kann;
R⁴ ist Wasserstoff oder Alkyl von 1 bis 4 C-Atomen, das substituiert sein kann, oder ist Phenyl, das durch 1 oder 2 Substituenten aus der Gruppe Sulfo, Methyl, Ethyl, Methoxy, Ethoxy und Carboxy substituiert sein kann;
A ist Alkylen von 2 bis 6 C-Atomen, das substituiert sein kann;
R ist Wasserstoff oder Sulfo;
R⁵ ist Wasserstoff, Sulfo, Alkyl von 1 bis 4 C-Atomen oder Alkoxy von 1 bis 4 C-Atomen;
R⁶ ist Wasserstoff, Sulfo, Alkyl von 1 bis 4 C-Atomen oder Alkoxy von 1 bis 4 C-Atomen;
R⁷ ist Wasserstoff, Alkyl von 1 bis 4 C-Atomen oder Alkoxy von 1 bis 4 C-Atomen;
V ist eine Carbonylgruppe der Formel -CO-O- oder eine Oxygruppe der Formel -O-;
R⁸ ist Wasserstoff, Methyl, Ethyl, Nitro, Sulfo oder Chlor;
R⁹ ist Phenyl, Monosulfo-phenyl oder Monocarboxy-phenyl;
die eine Gruppe -SO₃M in Formel (4) und in Formel (7) steht in meta- oder para-Stellung zur Aminogruppe an den Naphthalinkern des Aminonaphtholrestes gebunden.

2. Farbstoffmischung nach Anspruch 1, dadurch gekennzeichnet, daß sie vier bis sieben faserreaktive Farbstoffe der angegebenen Art enthält.

3. Farbstoffmischung nach Anspruch 1 oder 2, dadurch gekennzeichnet, daß der Farbstoff der allgemeinen Formel (1) ein Farbstoff der allgemeinen Formel (1A) 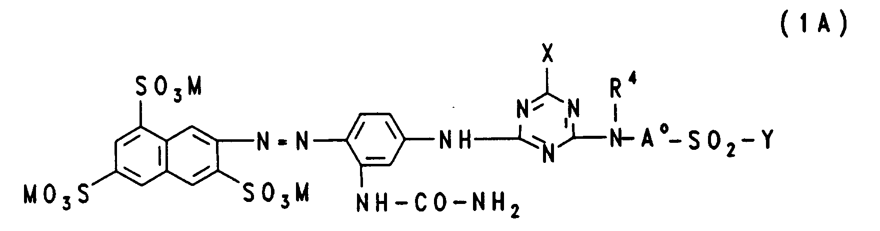 ist, in welcher M, X, R⁴ und Y die in Anspruch 1 genannten Bedeutungen haben und A^{o} ein Alkylen von 2 oder 3 C-Atomen ist, das durch Hydroxy, C₁-C₄-Alkoxy, Sulfo, Carboxy oder Halogen substituiert sein kann.

4. Farbstoffmischung nach Anspruch 1 oder 2, dadurch gekennzeichnet, daß der Farbstoff der allgemeinen Formel (2) ein Farbstoff der allgemeinen Formel (2A) 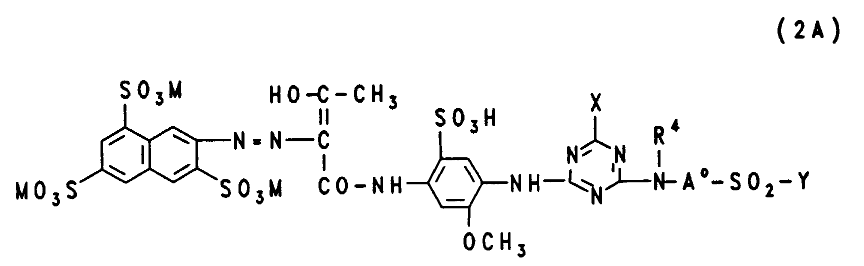 ist, in welcher M, X, R⁴ und Y die in Anspruch 1 genannten Bedeutungen haben und A^{o} ein Alkylen von 2 oder 3 C-Atomen ist, das durch Hydroxy, C₁-C₄-Alkoxy, Sulfo, Carboxy oder Halogen substituiert sein kann.

5. Farbstoffmischung nach Anspruch 1 oder 2, dadurch gekennzeichnet, daß der Farbstoff der allgemeinen Formel (3) ein Farbstoff der allgemeinen Formel (3A) 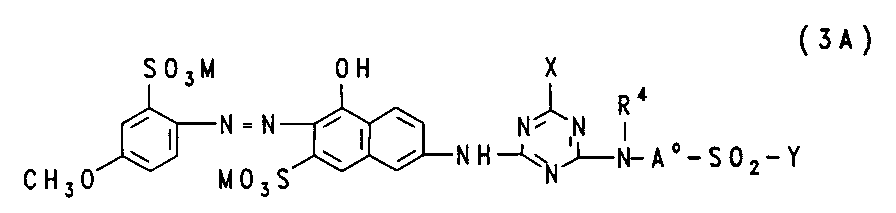 ist, in welcher M, X, R⁴ und Y die in Anspruch 1 genannten Bedeutungen haben und A^{o} ein Alkylen von 2 oder 3 C-Atomen ist, das durch Hydroxy, C₁-C₄-Alkoxy, Sulfo, Carboxy oder Halogen substituiert sein kann.

6. Farbstoffmischung nach Anspruch 1 oder 2, dadurch gekennzeichnet, daß der Farbstoff der allgemeinen Formel (4) ein Farbstoff der allgemeinen Formel (4A) 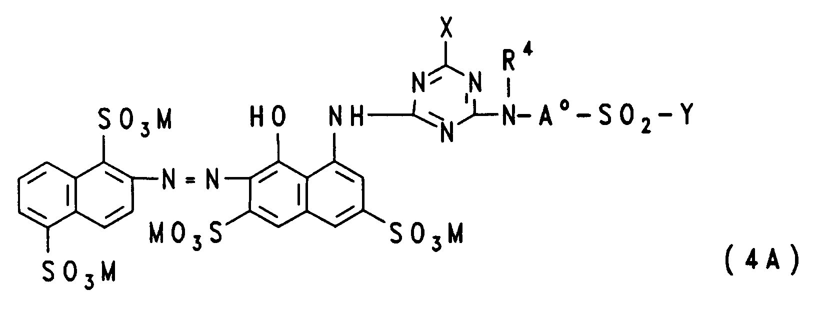 ist, in welcher M, X, R⁴ und Y die in Anspruch 1 genannten Bedeutungen haben und A^{o} ein Alkylen von 2 oder 3 C-Atomen ist, das durch Hydroxy, C₁-C₄-Alkoxy, Sulfo, Carboxy oder Halogen substituiert sein kann.

7. Farbstoffmischung nach Anspruch 1 oder 2, dadurch gekennzeichnet, daß der Farbstoff der allgemeinen Formel (5) ein Farbstoff der allgemeinen Formel (5A) 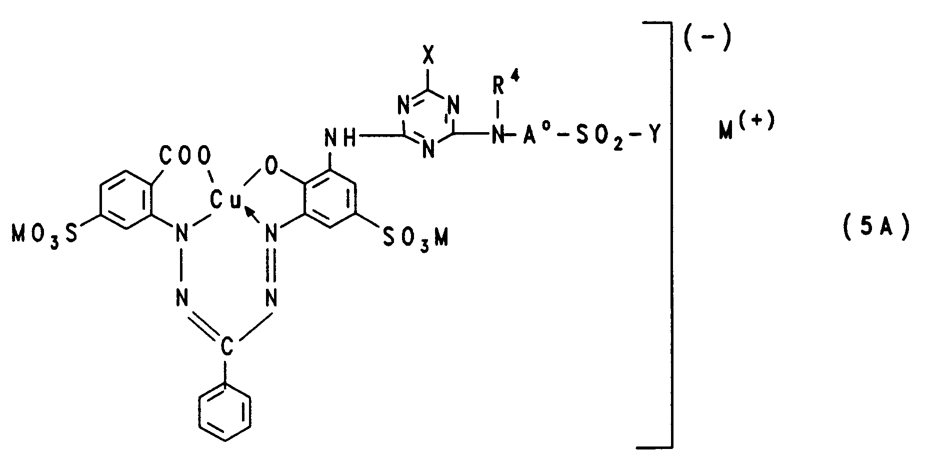 ist, in welcher M, X, R⁴ und Y die in Anspruch 1 genannten Bedeutungen haben und A^{o} ein Alkylen von 2 oder 3 C-Atomen ist, das durch Hydroxy, C₁-C₄-Alkoxy, Sulfo, Carboxy oder Halogen substituiert sein kann.

8. Farbstoffmischung nach Anspruch 1 oder 2, dadurch gekennzeichnet, daß der Farbstoff der allgemeinen Formel (6) ein Farbstoff der allgemeinen Formel (6A) 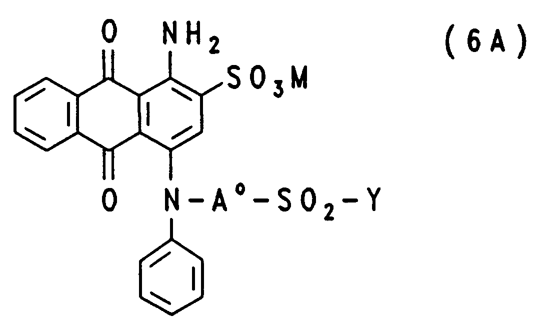 ist, in welcher M und Y die in Anspruch 1 genannten Bedeutungen haben und A^{o} ein Alkylen von 2 oder 3 C-Atomen ist, das durch Hydroxy, C₁-C₄-Alkoxy, Sulfo, Carboxy oder Halogen substituiert sein kann.

9. Farbstoffmischung nach Anspruch 1 oder 2, dadurch gekennzeichnet, daß der Farbstoff der allgemeinen Formel (7) ein Farbstoff der allgemeinen Formel (7A) 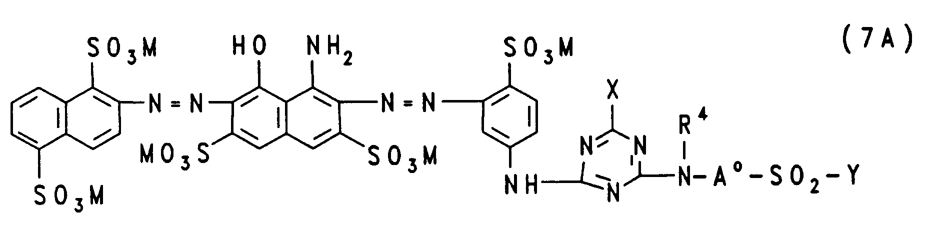 ist, in welcher M, X, R⁴ und Y die in Anspruch 1 genannten Bedeutungen haben und A^{o} ein Alkylen von 2 oder 3 C-Atomen ist, das durch Hydroxy, C₁-C₄-Alkoxy, Sulfo, Carboxy oder Halogen substituiert sein kann.

10. Farbstoffmischung nach mindestens einem der Ansprüche 1 bis 9, dadurch gekennzeichnet, daß X für Cyanoamino oder Methoxy steht.

11. Farbstoffmischung nach mindestens einem der Ansprüche 1 bis 10, dadurch gekennzeichnet, daß A^{o} 1,2-Ethylen oder 1,3-Propylen ist.

12. Farbstoffmischung nach mindestens einem der Ansprüche 1 bis 11, dadurch gekennzeichnet, daß R⁴ Wasserstoff, Methyl, Ethyl oder Phenyl ist.

13. Verwendung einer Farbstoffmischung nach mindestens einem der Ansprüche 1 bis 12 zum Färben von hydroxy- und/oder carbonamidgruppenhaltigem Fasermaterial.

14. Verfahren zum Färben von hydroxy- und/oder carbonamidgruppenhaltigem Fasermaterial, gemäß dem man einen Farbstoff oder eine Mischung von Farbstoffen auf das Material aufbringt und die Farbstoffe auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß man als Farbstoffe eine Farbstoffmischung von mindestens einem der Ansprüche 1 bis 12 auf das Fasermaterial appliziert und fixiert.
